# EUROPÄISCHE PATENTANMELDUNG

(11) **EP 1 386 662 A1**
(43) Veröffentlichungstag der Anmeldung: **04.02.2004**
(21) Anmeldenummer: 03016466.9
(22) Anmeldetag: 22.07.2003
(51) Int. Cl.: B01J 27/26, C08G 65/26

(54) **Doppelmetallcyanid-Katalysatoren für die Herstellung von Polyetherpolyolen**

(30) Priorität: 01.08.2002 DE 10235130
(71) Anmelder: Bayer Aktiengesellschaft, 51368 Leverkusen (DE)
(72) Erfinder: Ooms, Pieter, Dr., 47800 Krefeld (DE); Hofmann, Jörg, Dr., 47829 Krefeld (DE); Döbler, Martin, Dr., 40593 Düsseldorf (DE)

(57) **Zusammenfassung**

Die Erfindung betrifft neue Doppelmetallcyanid(DMC)-Katalysatoren für die Herstellung von Polyetherpolyolen durch Polyaddition von Alkylenoxiden an aktive Wasserstoffatome aufweisende Starterverbindungen, wobei der Katalysator a) mindestens eine Doppelmetallcyanid-Verbindung, b) mindestens einen organischen Komplexliganden und c) mindestens einen fluorhaltigen Komplexliganden enthält.

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ xZnCl₂ yH₂O zGlyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Es wurde nun gefunden, dass DMC-Katalysatoren, die eine oder mehrere fluorhaltige komplexbildende Komponenten enthalten, vorteilhaft bei der Polyetherpolyol-Herstellung eingesetzt werden können. Insbesondere eignen sie sich auch für die Polymerisation von Ethylenoxid oder die Copolymerisation von Ethylenoxid und höheren Epoxiden wie Propylenoxid.

Gegenstand der vorliegenden Erfindung ist daher ein Doppelmetallcyanid (DMC)-Katalysator, enthaltend
a) mindestens eine Doppelmetallcyanid-Verbindung,
b) mindestens einen organischen Komplexliganden, der keine Fluoratome enthält, und
c) mindestens einen fluorhaltigen Komplexliganden.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, aus der Herstellung der Doppelmetallcyanidverbindungen a) enthalten sein. Diese entsprechen bevorzugt der Formel M(X)ₙ, wobei M ausgewählt wird aus der Gruppe Zn (II), Fe (II), Ni (II), Mn (II), Co (II), Sn (II), Pb (II), Fe (III), Mo (IV), Mo (VI), A1 (III), V (V), V (IV), Sr (II), W (IV), W (VI), Cu (II) und Cr (III). Besonders bevorzugt sind Zn (II), Fe (II), Co (II) und Ni (II). X sind gleiche oder verschiedene, vorzugsweise gleiche Anionen. Bevorzugt ist X ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) können durch Reaktion wasserlöslicher Metallsalze und wasserlöslicher Metallcyanidsalze erhalten werden.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), A1 (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin
M wie in Formel (I) und
M' wie in Formel (II) definiert ist, und
x, x', y und z ganzzahlig und so gewählt sind, dass die Elektroneutralität der Doppelmetallcyanidverbindung gegeben ist.
Vorzugsweise ist
x =3, x' = 1, y =6 und z =2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Die erfindungsgemäßen Katalysatoren enthalten mindestens einen fluorhaltigen Komplexliganden c). Dabei kann es sich um fluorhaltige monomere Verbindungen handeln oder um fluorhaltige fünktionalisierte Polymere, bevorzugt Polymere ohne ionische Gruppen.

Beispiele für geeignete monomere fluorhaltige Komplexliganden sind fluorierte Alkohole, Ether, Aldehyde, Ketone, Acetale, Carbonsäureester, Carbonsäureamide, Carbonsäurenitrile und Phosphorverbindungen.

Für die Herstellung der erfindungsgemäßen Katalysatoren geeignete fluorhaltige Alkohole sind ein- oder mehrwertige, acyclische oder cyclische, aliphatische oder aromatische Alkohole mit 1 bis 30 C-Atomen. Beispiele sind 2,2,2-Trifluorethanol, 1,3-Difluor-2-propanol, 2,2,3,3-Tetrafluor-1 -propanol, 2,2,3,3,3-Pentafluor-1-propanol, 1,1,1,3,3,3-Hexafluor-2-propanol, Perfluor-tert.-butanol, 2,2,3,4,4,4-Hexafluor-1-butanol, 2,2,3,3,4,4,4-Heptafluor-1-butanol, 1,1,1,3,3,4,4,4-Octafluor-2-butanol, 2,2,3,3,4,4,5,5-Octafluor-1-pentanol, 2-Fluorcyclohexanol, 3,3,4,4,5,5,6,6,7,7,8,8,8-Tridecafluor-1-octanol, 2,2,3,3,4,4,5,5,6,6,7,7,8,8,8-Pentadecafluor-l-octanol, 2-Fluorethoxyethanol, 1-Fluorethylenglykol, 3-Fluor-1,2-propandiol, 2,3-Difluor-1,4-butandiol, 2,2,3,3,4,4-Hexafluor-1,5-pentandiol, 2,2,3,3,4,4,5,5-Octafluor-1,6-hexandiol, 2,2,3,3,4,4,5,5,6,6,7,7,8,8,9,9-Hexadecalluor-1,10-decandiol, 2-Fluor-1,2,3-propantriol, 2-Fluormethyl-2-hydroxymethyl-1,3-propandiol, 2-Fluorethyl-2-hydroxymethyl-1,3-propandiol, 2,2,3,3,4,4,5,5-Octafluorhexan-1,6-diol, 1,1,1,5,5,5-Hexafluorpentantriol, 4-Fluorphenol und 4-Trifluormethylphenol. Bevorzugt sind 2,2,3,3,4,4,5,5-Octafluorhexan-1,6-diol und 2-Fluorethoxyethanol.

Für die Herstellung der erfindungsgemäßen Katalysatoren geeignete fluorhaltige Ether sind gesättigte oder ungesättigte, geradkettige oder verzweigte, acyclische oder cyclische, aliphatische oder aromatische Dialkyl-, Alkylaryl- oder Diarylether mit 1 bis 30 C-Atomen, wie beispielsweise Bis(2,2,2-trifluorethyl)ether, Allyl-1,1,2,2-tetrafluorethylether, Allyl-1,1,2,3,3,3-hexafluorpropylether, Epifluorhydrin, Hexafluorpropylenoxid, 2,3-Epoxypropyl-1,1,2,2-tetrafluorethylether, 2,3-Epoxypropyl-2,2,3,3-tetrafluorpropylether, 2,3-Epoxypropyl-2,2,3,3,4,4,5,5-octafluorpentylether, 2,3-Epoxypropyl-2,2,3,3,4,4,5,5,6,6,7,7,8,8,9,9-hexadecafluor-nonylether, Ethylenglykolmono-4,4,5,5,5-pentafluorpentylether und Tetraethylenglykolpentafluorethylether, 2,2-Bis(trifluormethyl)-1,3-dioxolan, Trifluormethoxybenzol, 1-Methyl-2-(1,1,2,2-tetrafluorethoxy)benzol, 2-Fluoranisol, 3-Fluoranisol, 3-(Trifluormethyl)-anisol, 4-(Trifluormethoxy)toluol, 1-Brom-4-(Trifluormethoxy)benzol, 2,4-Difluoranisol, 2,3,5,6-Tetrafluoranisol und 2,3,4,5,6-Pentafluoranisol. Bevorzugt sind Ethylenglykolmono-4,4,5,5,5-pentafluorpentylether und Tetraethylenglykolpentafluorethylether.

Für die Herstellung der erfindungsgemäßen Katalysatoren geeignete fluorhaltige Aldehyde und Ketone sind gesättigte oder ungesättigte, geradkettige oder verzweigte, acyclische oder cyclische, aliphatische oder aromatische Aldehyde und Ketone mit 1 bis 30 C-Atomen, wie beispielsweise Trifluoracetaldehyd, Fluoraceton, 1,1,1-Trifluoraceton, Hexafluoraceton, Perfluor-2-butanon, Perfluorcyclopentanon, 1,1,1-Trifluor-2,4-pentandion und 1,1,1,5,5,5-Hexafluor-2,4-pentandion.

Für die Herstellung der erfindungsgemäßen Katalysatoren geeignete fluorhaltige Acetale sind gesättigte oder ungesättigte, geradkettige oder verzweigte, acyclische oder cyclische, aliphatische oder aromatische Acetale mit 1 bis 30 C-Atomen, wobei Fluor in der Carbonylkomponente und/oder in der Alkoholkomponente enthalten sein kann, wie beispielsweise Trifluoracetaldehyd-ethylhemiacetal, Trifluoracetaldehyddimethylacetal und Hexafluoraceton-dimethylacetal.

Für die Herstellung der erfindungsgemäßen Katalysatoren geeignete fluorhaltige Carbonsäureester sind gesättigte oder ungesättigte, geradkettige oder verzweigte, acyclische oder cyclische, aliphatische oder aromatische Mono-, Di, Tri- oder Polyester von ein- oder mehrwertigen Carbonsäuren mit 1 bis 30 C-Atomen und ein- oder mehrwertigen Alkoholen mit 1 bis 30 C-Atomen, wobei Fluor in der Carbonsäurekomponente und/oder in der Alkoholkomponente enthalten sein kann, wie beispielsweise Methyldifluoracetat, Ethyldifluoracetat, Methyltrifluoracetat, Ethylfluoracetat, Ethyltrifluoracetat, Isopropyltrifluoracetat, Butyltrifluoracetat, 2,2,2-Trifluorethyltrifluoracetat, Methylpentafluorpropionat, Ethylpentafluorpropionat, 2,2,2-Trifluorethylbutyrat, Methylheptafluorbutyrat, Ethylheptafluorbutyrat, Methylpentadecafluoroctanat, Methylnonadecafluordecanat, Diethylfluormalonat, Bis-(2,2,3,3,4,4,5,5,6,6,7,7-dodecafluorheptyl)camphorat, Glycerintriperfluoroctanat, Glycerinperfluordodecanat, 1-(Trifluormethyl)ethenylacetat, 2,2,2-Trifluorethylacrylat, 2,2,3,3-Tetrafluorpropylacrylat, 1,1,1,3,3,3-Hexafluorisopropylacrylat, 2,2,2-Trifluorethylmethacrylat, 2,2,3,3-Tetrafluorpropylmethacrylat, 1,1,1,3,3,3-Hexafluorisopropylmethacrylat, 2,2,3,4,4,4-Hexafluorbutylmethacrylat, Ethyl-4,4,4-trifluorcrotonat, Vinyltrifluoracetat, Allyltrifluoracetat, Ethyl-4,4,4-Trifluor-3-hydroxybutyrat und Sorbitantrifluoracetat. Bevorzugt sind Glycerintriperfluoroctanat, Glycerinperfluordodecanat und 2,2,3,4,4,4-Hexafluorbutylmethacrylat.

Weiterhin geeignet als Alkoholkomponente sind gegebenenfalls fluorsubstituierte Polyalkylenglykole oder Polyalkylenglykolether, bevorzugt Polypropylenglykole, Polyethylenglykole, Poly(oxypropylen-oxyethylen)polyole und Poly(tetramethylen)-glykole oder deren Ether mit Molekulargewichten von 200 bis 10.000 g/mol, bevorzugt 300 bis 9.000 g/mol, besonders bevorzugt 400 bis 8.000 g/mol.

Für die Herstellung der erfindungsgemäßen Katalysatoren geeignete fluorhaltige Carbonsäureamide sind gesättigte oder ungesättigte, geradkettige oder verzweigte, acyclische oder cyclische, aliphatische oder aromatische Amide von ein- oder mehrwertigen Carbonsäuren und ein- oder mehrwertigen Aminen, wobei Fluor in der Carbonsäurekomponente und/oder in der Aminkomponente enthalten sein kann, wie 2-Fluoracetamid, 2,2,2-Trifluoracetamid, 2-Chlor-2,2-difluoracetamid, N-Methyl-2,2,2-trifluoracetamid, N-Methyl-bis(trifluoracetamid), N-(2-hydroxyethyl)-2,2,2-trifluoracetamid, N,N-Diethyl-2,2,2-trifluoracetamid, N-Cyclopentyl-2,2,2-trifluoracetamid, Trifluormethylcarbamat, 1-Methyl-2,2,3,3-tetrafluorpropylcarbamat, 3-Trifluormethyl-2-oxazolidinon, 1-Trifluormethylpyrrolidinon, 1 -Pentafluorethylpyrrolidinon, und 1-Trifluormethylcaprolactam.

Für die Herstellung der erfindungsgemäßen Katalysatoren geeignete fluorhaltige Carbonsäurenitrile sind gesättigte oder ungesättigte, geradkettige oder verzweigte, acyclische oder cyclische, aliphatische oder aromatische Nitrile mit 1 bis 30 C-Atomen, wie Fluoracetonitril, Pentafluorpropionitril, Heptafluorbutyronitril und 2,2,3,3-Tetrafluorcyclobutancarbonsäurenitril.

Für die Herstellung der erfindungsgemäßen Katalysatoren geeignete fluorhaltige Phosphorverbindungen sind fluorhaltige organische Phosphate, Phosphite, Phosphonate, Phosphonite, Phosphinate und Phosphinite.

Geeignete organische Phosphate sind Mono-, Di- oder Triester von Phosphorsäure, Mono-, Di-, Tri- oder Tetraester von Pyrophosphorsäure und Mono-, Di-, Tri-, Tetraoder Polyester von Polyphosphorsäure und fluorsubstituierten Alkoholen mit 1 bis 30 C-Atomen, wie beispielsweise Diisopropylfluorphosphat und Tris(1-fluorbutyl)-phosphat.

Geeignete organische Phosphite sind fluorhaltige Mono-, Di- oder Triester von Phosphorigsäure und fluorsubstituierten Alkoholen mit 1 bis 30 C-Atomen, wie beispielsweise Tris(2,2,2-trifluorethyl)phosphit, Tris( 1,1,1,3,3,3-hexafluor-2-propyl)-phosphit und Bis(2,2,2-trifluorethyl)phosphit.

Als Komponente c) geeignete organische Phosphonate sind z.B. fluorhaltige Monooder Diester von Phosphonsäure, Alkylphosphonsäuren, Arylphosphonsäuren, Fluoralkylphosphonsäuren, Fluorarylphosphonsäuren, Alkoxycarbonylalkylphosphonsäuren, Alkoxycarbonylphosphonsäuren, Alkoxycarbonylfluoralkylphosphonsäuren, Fluoralkoxycarbonylfluoralkylphosphonsäuren, Fluoralkoxycarbonylphosphonsäuren, Cyanalkylphosphonsäuren, Cyanfluoralkylphosphonsäuren und Cyanphosphonsäuren oder Mono-, Di-, Tri- oder Tetraester von Alkyldiphosphonsäuren und Fluoralkyldiphosphonsäuren und fluorsubstituierten Alkoholen mit 1 bis 30 C-Atomen, wie beispielsweise Diethyl(difluormethyl)phosphonat, Diethyl(trifluormethyl)phosphonat, Bis(2,2,2,-trifluorethyl)methylphosphonat, (Triethyl-2-fluor-2-phosphonoacetat, Bis(2,2,2,-trifluorethyl)(methoxycarbonylmethyl)phosphonat und Diethyl (2,2,2-trifluor-1-hydroxyethyl)phosphonat.

Weiterhin als Komponente c) geeignete Phosphonite sind fluorhaltige Diester von Phosphonigsäure, Alkylphosphonigsäure, Fluoralkylphosphonigsäure, Arylphosphonigsäure oder Fluorarylphosphonigsäure und fluorsubstituierten Alkoholen mit 1 bis 30 C-Atomen.

Als Komponente c) geeignete Phosphinate sind fluorhaltige Ester von Phosphinsäure, Alkylphosphinsäuren, Fluoralkylphosphinsäuren, Dialkylphosphinsäuren Difluoralkylphosphinsäuren, Arylphosphinsäuren oder Fluorarylphosphinsäuren und fluorsubstituierten Alkoholen mit 1 bis 30 C-Atomen.

Als Komponente c) geeignete Phosphinite sind fluorhaltige Ester von Alkylphosphinigsäure, Fluoralkylphosphinigsäure, Dialkylphosphinigsäure, Difluoralkylphosphinigsäure, Arylphosphinigsäure oder Fluorarylphosphinigsäure und fluorsubstituierten Alkoholen mit 1 bis 30 C-Atomen.

Als Alkoholkomponente geeignet sind teil- oder perfluorierte ein- oder mehrwertige Aryl-, Aralkyl-, Alkoxyalkyl- und Alkylalkohole mit 1 bis 30 C-Atomen, bevorzugt 1 bis 24 C-Atomen, besonders bevorzugt 1 bis 20 C-Atomen, bevorzugt Aralkyl-, Alkoxyalkyl- und Alkylalkohole, besonders bevorzugt Alkoxyalkyl- und Alkylalkohole.

Die zur Herstellung der erfindungsgemäßen Katalysatoren eingesetzten fluorhaltigen organischen Phosphate, Phosphite, Phosphonate, Phosphonite, Phosphinate oder Phosphinite werden in der Regel durch Umsetzung von Phosphorsäure, Pyrophosphorsäure, Polyphosphorsäuren, Phosphonsäure, Alkylphosphonsäuren, Arylphosphonsäuren, Alkoxycarbonylalkylphosphonsäuren, Alkoxycarbonylphosphonsäuren, Cyanalkylphosphonsäuren, Fluoralkylphosphonsäuren, Fluorarylphosphonsäuren, Fluoralkoxycarbonylalkylphosphonsäuren, Fluoralkoxycarbonylphosphonsäuren, Cyanfluoralkylphosphonsäuren, Cyanphosphonsäure, Alkyldiphosphonsäuren, Phosphonigsäure, Phosphorigsäure, Phosphinsäure, Phosphinigsäure oder deren Halogenderivaten oder Phosphoroxiden mit teil- oder perfluorierten Hydroxyverbindungen mit 1 bis 30 C-Atomen, beispielsweise Fluorderivaten von Methanol, Ethanol, Propanol, Butanol, Pentanol, Hexanol, 2-Ethylhexanol, Heptanol, Octanol, Nonanol, Dekanol, Dodekanol, Tridekanol, Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit erhalten.

Beispiele geeigneter fluorhaltiger funktionalisierter Polymere sind fluorierte Derivate von Polyethern, Polyestern, Polycarbonaten, Polyalkylenglykolsorbitanestern, Polyalkylenglykolglycidylethern, Polyacrylamiden, Poly(acrylamid-co-acrylsäuren), Polyacrylsäuren, Poly(acrylsäure-co-maleinsäuren), Polyacrylnitrilen, Polyalkylacrylaten, Polyalkylmethacrylaten, Polyvinylmethylethern, Polyvinylethylethern, Polyvinylacetaten, Polyvinylalkoholen, Poly-N-vinylpyrrolidonen, Poly(N-vinylpyrrolidon-co-acrylsäuren), Polyvinylmethylketonen, Poly(4-vinylphenolen), Poly-(acrylsäure-co-styrolen), Oxazolinpolymeren, Polyalkyleniminen, Maleinsäure- oder Maleinsäureanhydridcopolymeren, Hydroxyethylcellulosen oder Polyacetalen.

Bevorzugt eingesetzte fluorhaltige funktionalisierte Polymere sind teilweise oder vollständig fluorierte Polyether, Polyester, Polycarbonate, Polyalkylenglykolsorbitanester und Polyalkylenglykolglycidylether. Besonders bevorzugt eingesetzt werden teilweise oder vollständig fluorierte Polyether.

Für die Herstellung der erfindungsgemäßen Katalysatoren geeignete fluorhaltige Polyetherderivate sind fluorhaltige Polyetherpolyole mit Hydroxyfunktionalitäten von 1 bis 8, besonders bevorzugt von 1 bis 3, und zahlenmittleren Molekulargewichten von 150 bis 10⁷ g/mol, besonders bevorzugt von 200 bis 5 · 10⁴ g/mol und deren Alkyl- Aralkyl-, Aryl, Fluoralkyl-, Fluoraralkyl- oder Fluorarylether. Sie werden in der Regel durch Ringöffnungspolymerisation von Epoxiden in Gegenwart entsprechender aktive Wasserstoffatome aufweisende Starterverbindungen unter basischer, saurer oder koordinativer Katalyse (z.B. DMC-Katalyse) erhalten. Geeignete Polyetherpolyole sind z.B. Poly(oxyperfluorpropylen)polyole, Poly(oxyperfluorethylen)-polyole, EO-getippte Poly(oxyperfluorpropylen)polyole, gemischte Poly(oxyperfluorethylen-oxyperfluorpropylen)polyole, gemischte Perfluorpropylen-perfluorformaldehydpolyole, Fluorbutylenoxid-Polymere, Fluorbutylenoxidcopolymere mit Ethylenoxid und/oder Propylenoxid und Poly(oxyperfluortetramethylen)glykole sowie Poly(oxypropylen)fluoralkylether, Poly(oxypropylen)fluorarylether, Poly(oxyethylen)fluoralkylether, Poly(oxyethylen)fluorarylether, Poly(oxyperfluorpropylen)alkylether, Poly(oxyperfluorpropylen)fluoralkylether, Poly(oxyperfluorethylen)alkylether, Poly(oxyperfluorethylen)fluoralkylether, Poly(oxyperfluorethylen)arylether und Poly(oxyperfluorpropylen)perfluorformaldehydcopolymere.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30 Gew.-%, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, mindestens eines fluorhaltigen Komplexliganden c).

Die Analyse der Katalysatorzusammensetzung erfolgt üblicherweise mittels Elementaranalyse, Thermogravimetrie oder extraktiver Entfernung der Komplexliganden mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendifraktometrie.

Bevorzugt sind erfindungsgemäße Katalysatoren enthaltend
a) Zinkhexacyanocobaltat (III),
b) tert.-Butanol und
c) mindestens einen fluorhaltigen Komplexliganden.

Die Herstellung der erfindungsgemäßen DMC-Katalysatoren erfolgt üblicherweise in wässriger Lösung durch Umsetzung von Metallsalzen, insbesondere der Formel (I), mit Metallcyanidsalzen, insbesondere der Formel (II), in Gegenwart von organischen Komplexliganden b), die keine Fluoratome enthalten, und einem oder mehreren fluorhaltigen Komplexliganden c).

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) und des (der) fluorhaltigen Komplexliganden c) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) und den (die) fluorhaltigen Komplexliganden c) enthält.

Der organische Komplexligand b) und/oder der(die) fluorhaltige(n) Komplexliganden c) können dabei in der wässrigen Lösung des Metallsalzes und/oder des Metallcyanidsalzes vorhanden sein, oder sie werden der nach Ausfällung der Doppelmetallcyanid-Verbindung a) erhaltenen Suspension unmittelbar zugegeben. Es hat sich als vorteilhaft erwiesen, die wässrigen Lösungen und den organischen Komplexliganden b) und den (die) fluorhaltigen Komplexliganden c) unter starkem Rühren zu vermischen.

Die Isolierung des Katalysators aus der Suspension erfolgt durch bekannte Techniken, wie Zentrifugation oder Filtration. In einer bevorzugten Ausführungsvariante wird der isolierte Katalysator anschließend mit einer wässrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wässrigen Waschlösung zwischen 40 und 80 Gew.-%, bezogen auf die Gesamtlösung. Weiterhin ist es vorteilhaft, der wässrigen Waschlösung eine kleine Menge der Mischung aus einem oder mehreren fluorhaltigen Komplexliganden c) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden b) und der Mischung aus einem oder mehreren fluorhaltigen Komplexliganden c).

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aüfweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen, beispielsweise beim sogenannten "Ethylenoxid-Tip", bei dem ein Polyether mit endständigen Polyethylenoxidblöcken erzeugt wird. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2 000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2 000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1.000 bis 50.000 g/mol, besonders bevorzugt im Bereich von 2.000 bis 20.000 g/mol.

Die Polyaddition kann kontinuierlich oder diskontinuierlich, z.B. in einem Batchoder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorpräparation

### Beispiel 1

### Herstellung eines DMC-Katalysators mit Glycerintriperfluoroctanoat (Katalysator A).

Zu einer Lösung aus 4 g (12 mmol) Kaliumhexacyanocobaltat in 144 ml destilliertem Wasser, 21 g tert.-Butanol und 0,4 g Glycerintriperfluoroctanoat wurde unter starkem Rühren (24.000 U/min) eine Lösung aus 41 g (300 mmol) Zinkchlorid in 41 ml destilliertem Wasser gegeben und anschließend 10 min stark gerührt (24.000 U/min). Der Feststoff wurde durch Filtration isoliert, dann 10 min mit einer Mischung aus 54 g tert.-Butanol, 27 g destilliertem Wasser und 1,6 g Glycerintriperfluoroctanoat gerührt (10.000 U/min) und erneut filtriert. Abschließend wurde noch einmal 10 min mit einer Mischung aus 78 g tert.-Butanol und 0,7 g Glycerintriperfluoroctanoat gerührt (10.000 U/min). Nach Filtration wurde der Katalysator bei 60°C 2 Stunden im Hochvakuum getrocknet.

Ausbeute an getrocknetem, pulverförmigem Katalysator: 3,4 g

### Beispiel 2

### Herstellung eines DMC-Katalysators mit Ethylenglykolmono-4,4,5,5,5-pentafluorpentylether (Katalysator B)

Es wurde verfahren wie in Beispiel 1, jedoch wurde Ethylenglykolmono-4,4,5,5,5,-pentafluorpentylether anstelle des Glycerintriperfluoroctanoats aus Beispiel 1 eingesetzt.

Ausbeute an getrocknetem, pulverförmigem Katalysator: 2,5 g

### Beispiel 3

### Herstellung eines DMC-Katalysators mit Tetraethylenglykolpentafluorethylether (Katalysator C)

Es wurde verfahren wie in Beispiel 1, jedoch wurde Tetraethylenglykolpentafluorethylether anstelle des Glycerintriperfluoroctanoats aus Beispiel 1 eingesetzt.

Ausbeute an getrocknetem, pulverförmigem Katalysator: 2,6 g

### Beispiel 4

### Herstellung eines DMC-Katalysators mit Methacrylsäure-2,2,3,4,4,4-hexafluorbutylester (Katalysator D)

Es wurde verfahren wie in Beispiel 1, jedoch wurde Methacrylsäure-2,2,3,4,4,4-hexafluorbutylester anstelle des Glycerintriperfluoroctanoats aus Beispiel 1 eingesetzt.

Ausbeute an getrocknetem, pulverförmigem Katalysator: 1,2 g

### Beispiel 5

### Herstellung eines DMC-Katalysators mit 2-Fluorethoxyethanol (Katalysator E)

Es wurde verfahren wie in Beispiel 1, jedoch wurde 2-Fluorethoxyethanol anstelle des Glycerintriperfluoroctanoats aus Beispiel 1 eingesetzt.

Ausbeute an getrocknetem, pulverförmigem Katalysator: 2,3 g

### Beispiel 6

### Herstellung eines DMC-Katalysators mit 2,2,3,3,4,4,5,5-Octafluorhexan-1,6-diol (Katalysator F)

Es wurde verfahren wie in Beispiel 1, jedoch wurde 2,2,3,3,4,4,5,5-Octafluorhexan-1,6-diol anstelle des Glycerintriperfluoroctanoats aus Beispiel 1 eingesetzt.

Ausbeute an getrocknetem, pulverförmigem Katalysator: 3,4 g

### Beispiel 7 (Vergleich)

### Herstellung eines DMC-Katalysators mit Ethylenglykolmonopentylether (Katalysator G)

Zu einer Lösung aus 4 g (12 mmol) Kaliumhexacyanocobaltat in 144 ml destilliertem Wasser, 21 g tert.-Butanol und 0,4 g Ethylenglykolmonopentylether wurde unter starkem Rühren (24.000 U/min) eine Lösung aus 41 g (300 mmol) Zinkchlorid in 41 ml destilliertem Wasser gegeben und anschließend 10 min stark gerührt (24.000 U/min). Der Feststoff wurde durch Filtration isoliert, dann 10 min mit einer Mischung aus 54 g tert.-Butanol, 27 g destilliertem Wasser und 1,6 g Ethylenglykolmonopentylether gerührt (10.000 U/min) und erneut filtriert. Abschließend wurde noch einmal 10 min mit einer Mischung aus 78 g tert.-Butanol und 0,7 g Ethylenglykolmonopentylether gerührt (10.000 U/min). Nach Filtration wurde der Katalysator bei 60°C 2 Stunden im Hochvakuum getrocknet.

Ausbeute an getrocknetem, pulverförmigem Katalysator: 1,7 g

### Beispiel 8 (Vergleich)

### Herstellung eines DMC-Katalysators mit Hexan-1,6-diol (Katalysator H)

Es wurde verfahren wie in Beispiel 7 (Vergleich), jedoch wurde Hexan-1,6-diol anstelle des Ethylenglykolmonopentylethers aus Beispiel 7 eingesetzt.

Ausbeute an getrocknetem, pulverförmigem Katalysator: 2,6 g

### Herstellung von Polyetherpolyolen

### Allgemeine Durchführung

In einem 500 ml Druckreaktor wurden 50 g Polypropylenglykol-Starter (Molekulargewicht = 1 000 g/mol) und 5 mg Katalysator (25 ppm, bezogen auf die Menge des herzustellenden Polyetherpolyols) unter Schutzgas (Argon) vorgelegt und unter Rühren auf 105°C aufgeheizt. Anschließend wurde Propylenoxid (ca. 5 g) auf einmal zudosiert, bis der Gesamtdruck auf 2,5 bar angestiegen war. Weiteres Propylenoxid wurde erst dann wieder zudosiert, wenn ein beschleunigter Druckabfall im Reaktor beobachtet wurde. Dieser beschleunigte Druckabfall zeigt an, dass der Katalysator aktiviert ist. Anschließend wurde das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C wurden flüchtige Anteile bei 90°C (1 mbar) abdestilliert und anschließend wurde die Reaktionsmischung auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung.

### Beispiel 9

### Herstellung von Polyetherpolyol mit Katalysator A (25 ppm)

| | | |
|---|---|---|
| Propoxylierungszeit | | 41 min |
| Polyetherpolyol | OH-Zahl (mg KOH/g) | 29,7 |
| | Doppelbindungsgehalt (mMol/kg) | 7 |
| | Viskosität 25°C (mPas) | 915 |

### Beispiel 10

### Herstellung von Polyetherpolyol mit Katalysator B (25 ppm)

| | | |
|---|---|---|
| Propoxylierungszeit | | 17 min |
| Polyetherpolyol | OH-Zahl (mg KOH/g) | 29,7 |
| | Doppelbindungsgehalt (mMol/kg) | 7 |
| | Viskosität 25°C (mPas) | 980 |

### Beispiel 11

### Herstellung von Polyetherpolyol mit Katalysator C (25 ppm)

| | | |
|---|---|---|
| Propoxylierungszeit | | 14 min |
| Polyetherpolyol | OH-Zahl (mg KOH/g) | 30,1 |
| | Doppelbindungsgehalt (mMol/kg) | 5 |
| | Viskosität 25°C (mPas) | 834 |

### Beispiel 12

### Herstellung von Polyetherpolyol mit Katalysator D (25 ppm)

| | | |
|---|---|---|
| Propoxylierungszeit | | 30 min |
| Polyetherpolyol | OH-Zahl (mg KOH/g) | 29,1 |
| | Doppelbindungsgehalt (mMol/kg) | 7 |
| | Viskosität 25°C (mPas) | 1000 |

### Beispiel 13

### Herstellung von Polyetherpolyol mit Katalysator E (25 ppm)

| | | |
|---|---|---|
| Propoxylierungszeit | | 31 min |
| Polyetherpolyol | OH-Zahl (mg KOH/g) | 30,3 |
| | Doppelbindungsgehalt (mMol/kg) | 7 |
| | Viskosität 25°C (mPas) | 986 |

### Beispiel 14

### Herstellung von Polyetherpolyol mit Katalysator F (25 ppm)

| | | |
|---|---|---|
| Propoxylierungszeit | | 18 min |
| Polyetherpolyol | OH-Zahl (mg KOH/g) | 29,5 |
| | Doppelbindungsgehalt (mMol/kg) | 7 |
| | Viskosität 25°C (mPas) | 855 |

### Beispiel 15 (Vergleich)

### Herstellung von Polyetherpolyol mit Katalysator G (25 ppm)

| | | |
|---|---|---|
| Propoxylierungszeit | | 20 min |
| Polyetherpolyol | OH-Zahl (mg KOH/g) | 29,9 |
| | Doppelbindungsgehalt (mMol/kg) | 9 |
| | Viskosität 25°C (mPas) | 812 |

### Beispiel 16 (Vergleich)

### Herstellung von Polyetherpolyol mit Katalysator H (25 ppm)

| | | |
|---|---|---|
| Propoxylierungszeit | | 31 min |
| Polyetherpolyol | OH-Zahl (mg KOH/g) | 30,0 |
| | Doppelbindungsgehalt (mMol/kg) | 5 |
| | Viskosität 25°C (mPas) | 1049 |

## Patentansprüche

1. Doppelmetallcyanid (DMC)-Katalysator enthaltend
a) mindestens eine Doppelmetallcyanid-Verbindung,
b) mindestens einen organischen Komplexliganden, der keine Fluoratome enthält, und
c) mindestens einen fluorhaltigen Komplexliganden.

2. DMC-Katalysator nach Anspruch 1, zusätzlich enthaltend d) Wasser und/oder e) wasserlösliches Metallsalz.

3. DMC-Katalysator nach Anspruch 1, worin die Doppelmetallcyanid-Verbindung Zinkhexacyanocobaltat(III) ist.

4. DMC-Katalysator nach einem der Ansprüche 1 bis 3, worin der organische Komplexligand b) tert.-Butanol ist.

5. DMC-Katalysator nach einem der Ansprüche 1 bis 4, worin der Katalysator 1 bis 80 Gew.-% eines fluorhaltigen Komplexliganden c) oder einer Mischung mehrerer fluorhaltiger Komplexliganden c) enthält.

6. Verfahren zur Herstellung eines DMC-Katalysators, enthaltend die Schritte
i) Umsetzung in wässriger Lösung von
α) Metallsalzen mit Metallcyanidsalzen
β) organischen Komplexliganden, die keine Fluoratome enthalten, und
γ) einem oder mehreren fluorhaltigen Komplexliganden c)
ii) Isolieren, Waschen und Trocknen des in Schritt i) erhaltenen Katalysators.

7. Verfahren zur Herstellung von Polyetherpolyolen durch Polyaddition von Alkylenoxiden an aktive Wasserstoffatome aufweisende Starterverbindungen, in Gegenwart eines oder mehrerer DMC-Katalysatoren nach einem der Ansprüche 1 bis 5.

8. Polyetherpolyol, herstellbar nach dem Verfahren gemäß Anspruch 7.

9. Verwendung von DMC-Katalysatoren nach einem der Ansprüche 1 bis 5 zur Herstellung von Polyetherpolyolen durch Polyaddition von Alkylenoxiden an aktive Wasserstoffatome aufweisende Starterverbindungen.
